# EUROPÄISCHE PATENTSCHRIFT

(11) **EP 1 148 345 B1**
(45) Veröffentlichungstag und Bekanntmachung des Hinweises auf die Patenterteilung: **28.03.2007**
(21) Anmeldenummer: 00108530.7
(22) Anmeldetag: 19.04.2000
(51) Int. Cl.: G01S 7/497, G01S 7/481

(54) **Vorrichtung zum Orten von in einen zu überwachenden Raumbereich eindringenden Objekten**
Apparatus for localisation of objects penetrating a monitored space
Dispositif pour localiser l'entrée d'objets dans un domaine spatial surveillé

(43) Veröffentlichungstag der Anmeldung: 24.10.2001
(73) Patentinhaber: SICK AG, 79183 Waldkirch (DE)
(72) Erfinder: Meinert, Thomas, D-79312 Emmendingen (DE); Jakob, Hermann, 79350 Sexau (DE)
(74) Vertreter: Ludewigt, Christoph

(56) Entgegenhaltungen:
- EP-A- 0 573 697
- EP-A- 0 897 121
- DE-C- 3 908 273
- DE-C- 4 341 080

## Beschreibung

Die Erfindung betrifft eine Vorrichtung zum Orten von in einen zu überwachenden Raumbereich eindringenden Objekten nach dem Anspruch 1 bzw. 7.

Bei derartigen Vorrichtungen, die zur Absicherung gefährlicher Bereiche verwendet werden, ist es bekannt, sämtliche Systemfunktionen zyklisch zu überprüfen, um die volle Verfügbarkeit des Systems sicherzustellen bzw. beim Auftreten einer Fehlfunktion ein Warnsignal abzugeben.

In diesem Zusammenhang ist es bekannt, ein ortsfestes Testobjekt in Form einer zusätzlichen optischen Komponente innerhalb des Bereichs, der von dem abtastenden Lichtstrahl überstrichen wird, im Gehäuse der Vorrichtung anzuordnen, vgl. DE 39 08 273 C1 und DE 43 41 080 C1. Am Empfänger muß bei Überstreichen des Testobjekts das erwartete Testsignal entstehen, wenn keine Fehlermeldung erzeugt werden soll. Liegt das Testsignal beispielsweise aufgrund der Verschmutzung optischer Komponenten oder einer Degradation des Senders unter einem vorbestimmten Erwartungswert, erfolgt eine Fehlermeldung.

Eine Vorrichtung nach dem Oberbegriff des Anspruchs 1 bzw. 7 ist aus der Offenbarung gemäß EP-897121-A2 bekannt.

Aufgabe der Erfindung ist es, eine Vorrichtung nach dem Oberbegriff des Anspruchs 1 bzw. 7 zu schaffen, die es gegebenenfalls ohne zusätzliche optische Komponente für das Testobjekt ermöglicht, die Verschmutzung optischer Komponenten oder eine Degradation des Senders zu überprüfen.

Diese Aufgabe wird entsprechend dem kennzeichnenden Teil des Anspruchs 1 bzw. 7 gelöst.

Weitere Ausgestaltungen der Erfindung sind der nachfolgenden Beschreibung und den Unteransprüchen zu entnehmen.

Die Erfindung wird nachstehend anhand von in den beigefügten Abbildungen dargestellten Ausführungsbeispielen näher erläutert.
Fig. 1 zeigt eine Vorrichtung zum Orten von in einen zu überwachenden Raumbereich eindringenden Objekten.
Fig. 2 und 3 zeigen schematisiert einen Ausschnitt von Fig. 1 in zwei unterschiedlichen Stellungen der optischen Umlenkeinrichtung.
Fig. 4 zeigt ausschnittweise den Empfangsumlenkspiegel der Vorrichtung.
Fig. 5 zeigt ausschnittweise eine weitere Ausführungsform einer Vorrichtung zum Orten.
Fig. 6 und 7 zeigen eine zusätzliche Ausführungsform einer Vorrichtung zum Orten von zwei um 90° versetzten Seiten.

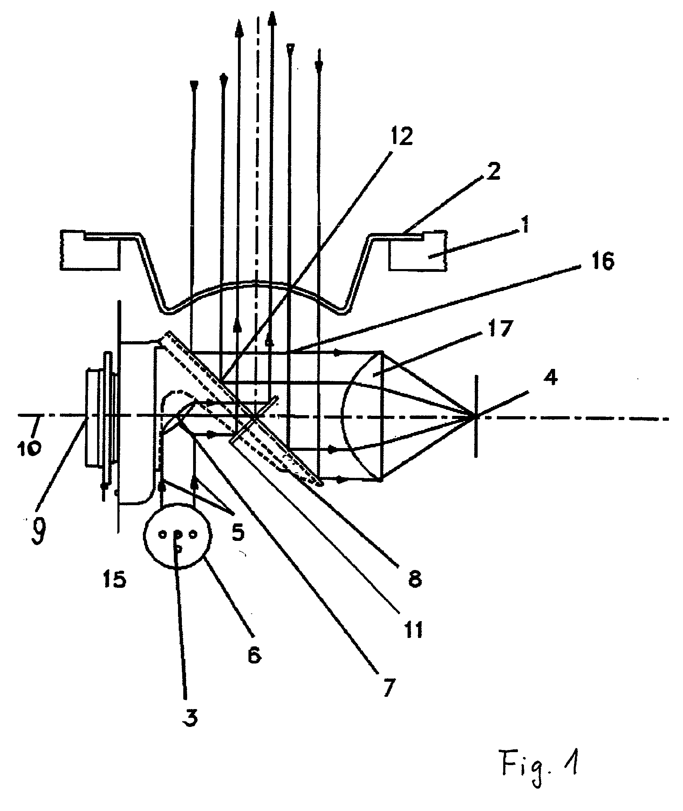

Die in Fig. 1 dargestellte Vorrichtung umfaßt ein Gehäuse 1, das zu einem zu überwachenden Raumbereich hin mit einem Fenster 2, das insbesondere einen kugelausschnittförmigen Mittelabschnitt aufweist, versehen ist. Innerhalb des Gehäuses 1 befindet sich ein Sender 3 und ein Empfänger 4 für optische Strahlung, insbesondere (gepulste) Laserstrahlung. Ein vom Sender 3 ausgesendetes Sendestrahlenbündel 5 wird über eine Kollimatoroptik 6 und zwei planen, um 45° geneigten Justage- und Umlenkspiegel 7 (nur einer in Fig. 1 sichtbar) auf eine optische Umlenkeinrichtung 8 geworfen. Die Umlenkeinrichtung 8 ist über einen Motor 9 um eine Rotationsachse10 drehbar.

Die Umlenkeinrichtung 8 umfaßt einen Sendeumlenkspiegel 11 und einen in bezug hierzu feststehend und senkrecht montierten Empfangsumlenkspiegel 12. Die planen Sende- und Empfangsumlenkspiegel 11, 12 sind beide in einem Winkel von 45° zur Drehachse 10 geneigt angeordnet, wobei der Empfangsumlenkspiegel 12 eine mittige Ausnehmung 13 aufweist, in der der Sendeumlenkspiegel 11 angeordnet ist, der in einem Winkel von 90° zum Empfangsumlenkspiegel 12 angeordnet ist.

Sende- und Empfangsumlenkspiegel 11, 12 sind auf einem Träger 14 befestigt, dessen Fuß 15 mit dem Motor 9 gekoppelt ist, um die Umlenkeinrichtung 8 um die Drehachse 10 zu drehen.

Vom Sendeumlenkspiegel 11 wird das Strahlenbündel 5 durch das Fenster 2 in den zu überwachenden Raumbereich reflektiert und überstreicht infolge der kontinuierlichen Drehung der Umlenkeinrichtung 8 den zu überwachenden Raumbereich.

Ein von einem Objekt im zu überwachenden Raumbereich reflektiertes Empfangsstrahlenbündel 16 tritt durch das Fenster 2 in das Gehäuse 1 ein und fällt auf den Empfangsumlenkspiegel 12, von dem es auf einen Empfangskollimator 17 reflektiert wird, der das Empfangsstrahlenbündel 16 auf den Empfänger 4 bündelt, der die An- oder Abwesenheit eines Objektes im zu überwachenden Raumbereich feststellt.

Das Fenster 2 ist langgestreckt, von gleichbleibender Höhe und Stärke und führt beispielsweise zu einem Abtastbereich, der sich über etwa 180° senkrecht zur Drehachse 10 erstreckt. Der Abtastbereich des ausgesendeten Sendestrahlenbündels 5 wird zweckmäßigerweise durch einen Mittelabschnitt 18 des Fensters 2 in Form eines Kugelausschnitts begrenzt, dessen Mittelpunkt der Schnittpunkt der Rotationsachse 10 mit den optischen Achsen des ein- und ausfallenden Sende- bzw. Empfangsstrahlenbündels 5, 16 ist.

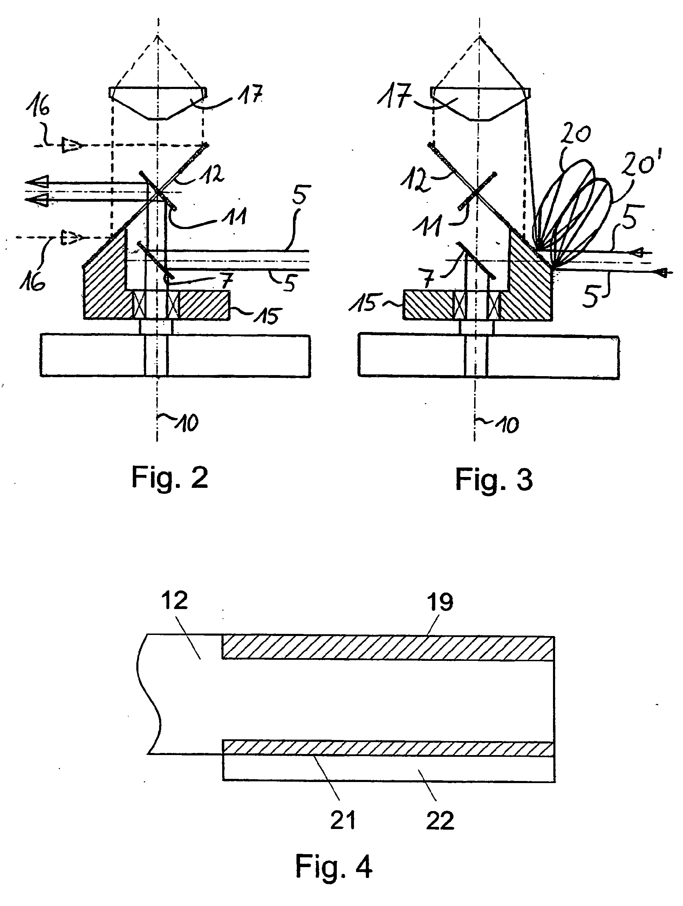

Der dargestellte Umlenkspiegel 7 lenkt die vom Sender 3 kommende Strahlung so auf den rotierenden Sendeumlenkspiegel 11 um, daß die optische Achse des vom Umlenkspiegel 7 ausgehenden Sendestrahlenbündels 5 und die Rotationsachse 10 kolinear und insbesondere koaxial sind, Fig. 2.

Der Empfangsumlenkspiegel 12 ist soweit über den durch die Optik des Empfangskollimators 17 vorgegebenen Bereich um eine Testzone 19 mit lichtstreuender Oberfläche verlängert, daß die Testzone 19 die auf den Umlenkspiegel 7 gerichtete Strahlung schneidet, wenn aufgrund der Drehung der Umlenkeinrichtung 8 der Empfangsumlenkspiegel 12 zwischen den planen Umlenkspiegeln 7 steht, Fig. 3, d.h. bei Drehung innerhalb des Winkelbereichs, in dem der Empfangsumlenkspiegel 12 kein von einem Objekt reflektiertes Empfangsstrahlenbündel 16 durch das Fenster 2 empfängt. Das Sendestrahlbündel wird innerhalb eines Winkelbereichs von 220° bis 350° geschnitten.

Die Testzone 19 erzeugt eine gerichtete Reflexionskeule 20, 20', von der relativ geringer Teil auf den Empfangskollimator 17 fällt und damit auf die lichtempfindliche Fläche des Empfängers 4 gelenkt wird. Der andere Teil der Reflexionskeule 20, 20', und zwar insbesondere der (durch spiegelnde Reflexion) gerichtete Anteil der Reflexionskeule 20, 20' liegt außerhalb der Pupille des Empfangskollimators 17 und kann somit nicht zur Entstehung eines Testsignals beitragen.

Die Testzone 19 besitzt insbesondere eine rauhe Oberfläche, die vorzugsweise dadurch erzeugt wird, daß der Bereich der Testzone 19 bei der Herstellung des Empfangsumlenkspiegels 12 zwar geschliffen, aber nicht anschließend wie die Spiegelfläche poliert und bedampft wird. Entsprechend der Rauhtiefe, die vorzugsweise im Bereich von etwa 1 bis 20 um liegt, der geschliffenen Testzone 19 entsteht die gerichtete Reflexionskeule 20, 20'.

Wenn der Empfangsumlenkspiegel 12 aus transparentem Material wie Glas besteht, ist es außerdem zweckmäßig, den der Testzone 19 abgekehrten, korrespondierenden Abschnitt 21 auf der Rückseite des Empfangsumlenkspiegels 12 ebenfalls aufzurauhen (Rauhtiefe 1 bis 20µm) und mit einer Schicht 22 aus einem strahlungsabsorbierenden Medium wie schwarzem Lack zu beschichten, vgl. Fig. 4. Hierdurch wird eine spiegelnde Reflexion am Abschnitt 21 verhindert.

Hierdurch ist nicht nur kein separates optisches Teil als Testobjekt vonnöten, sondern eine Verschmutzung der Testzone 19 läßt sich außerdem überprüfen. Wird beispielsweise die lichtstreuende Fläche der Testzone 19 mit einem Flüssigfilm, etwa einem Öl, bedeckt, wird der gerichtete Anteil der Reflexionskeule 20, 20' erhöht und der stark erhöhte transmittierende Strahlungsanteil im Bereich des Abschnitts 21 absorbiert, so daß der Testsignalpegel entsprechend sinkt.

Eine Verschmutzung der Fläche der Testzone 19 durch feste Partikel führt dagegen zu erhöhter Absorption von Strahlung in diesem Bereich und somit wiederum zu einem Abfall des Testsignals.

Sowohl Verschmutzung durch Bestäubung als auch Betauung (Feuchtigkeitsniederschlagsbildung) führen dadurch zur Abnahme des Testsignalpegels. Veränderungen an dem durch die Testzone gebildeten Testobjekt führen somit nur zu einer Verfügbarkeitseinschränkung der Vorrichtung zum Orten von in einen zu überwachenden Raumbereich eindringenden Objekten.

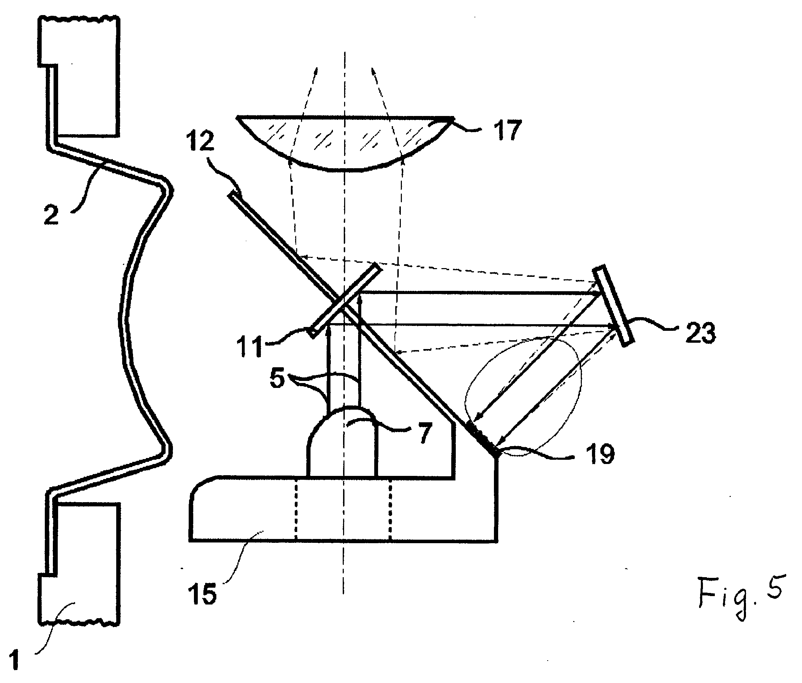

Bei der in Fig. 5 dargestellten Ausführungsform wird das vom Sender 3 ausgesandte Strahlenbündel 5, das auf den Sendeumlenkspiegel 11 fällt, dann, wenn sich letzterer in einer Position befindet, in der das Strahlenbündel 5 nicht durch das Fenster 2 austritt, sondern in das Innere des Gehäuses 1 reflektiert wird, von einem im Gehäuse in einer vorbestimmten Position befindlichen Spiegel 23 auf die Testzone 19 reflektiert. Die von der Testzone 19 gestreute Strahlung wird dann wiederum über den Spiegel 23 auf den Empfangsumlenkspiegel 12 gelenkt und gelangt von dort über den Empfangskollimator 17 zum Empfänger 4. Hierbei ist es möglich, daß durch die Bewegung des Trägers 15 die Signalamplitude der Testzone 19 definiert variiert werden kann. Der Testzone 19 oder der Spiegel 23 können hierbei in Drehrichtung des Trägers 15 unterschiedlich stark reflektierende bzw. streuende Bereiche aufweisen.

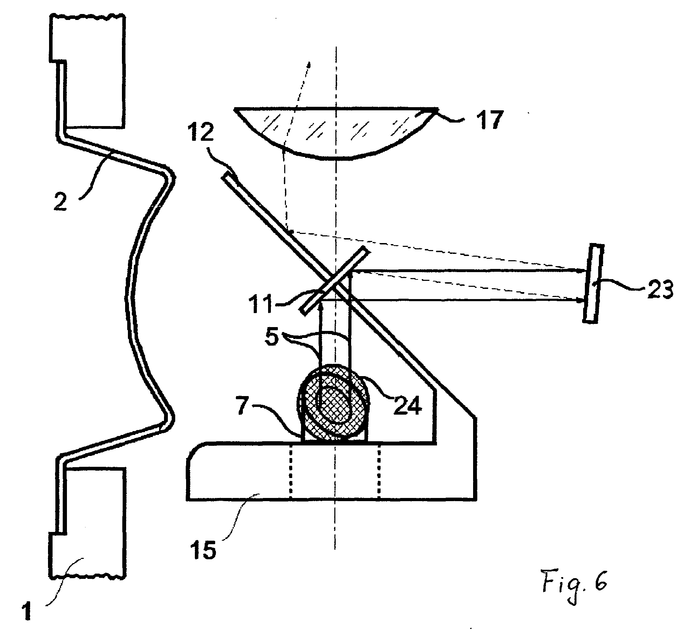

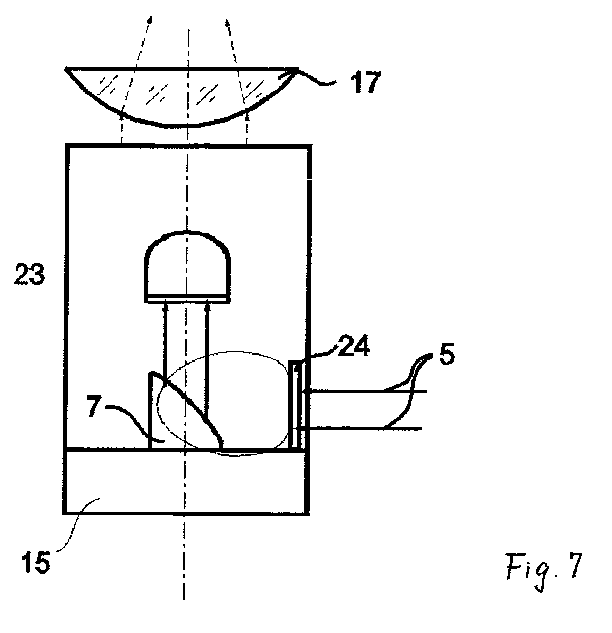

Bei der in den Fig. 6 und 7 dargestellten Ausführungsform ist auf dem Träger 15 eine durchstrahlbare Streuscheibe 24 angeordnet, die sich mit dem Träger 15 mitdreht und somit in einer bestimmten Position in das vom Sender 3 auf den Justage- und Umlenkspiegel 7 gelenkte Strahlenbündel 5 gelangt. das entsprechend gestreute und damit geschwächte, auf den Justage- und Umlenkspiegel 7 gelangende Strahlenbündel 5 wird dann über den Sendeumlenkspiegel 11 auf den Spiegel 23 gelenkt, von dem die so empfangene Strahlung über den Empfangsumlenkspiegel 12 und den Empfangskollimator 17 zum Empfänger 4 gelangt. Hierbei kann die Streuscheibe 24 in Drehrichtung unterschiedlich streuende Bereiche aufweisen (oder der Spiegel 23 Bereiche unterschiedlicher Reflexionsstärke besitzen), so daß der Empfänger 4 entsprechend unterschiedliche Signale empfängt, so daß neben der Funktionsfähigkeit von Sender 3 und Empfänger 4 auch hier ebenso wie bei der vorhergehenden Ausführungsform von Fig. 5 der Dynamikbereich des Empfängers 4 überprüft werden kann. Der Empfänger 4 besitzt einen Verstärker, der gegebenenfalls bei größeren Amplituden nicht mehr richtig arbeitet. Dies läßt sich über unterschiedliche Streubereiche kontrollieren.

## Patentansprüche

1. Vorrichtung zum Orten von in einen zu überwachenden Raumbereich eindringenden Objekten, mit einem Gehäuse (1), das einen Sender (3) und einen Empfänger (4) für optische Strahlung sowie eine umlaufend drehbare optische Umlenkeinrichtung (8) einerseits mit einem um eine Rotationsachse (10) drehbaren und gegenüber dieser geneigten Sendeumlenkspiegel (11) für ein ausfallendes Sendestrahlenbündel (5) durch ein Fenster (2) im Gehäuse (1) in den durch das ausfallende Sendestrahlenbündel (5) zu überstreichenden Raumbereich und andererseits mit einem Empfangsumlenkspiegel (12) zum Lenken eines aus dem Raumbereich reflektierten, durch das Fenster (2) einfallenden Empfangsstrahlenbündels (16) über einen Empfangskollimator (17) zum Empfänger (4) enthält, **dadurch gekennzeichnet, daß** an dem Empfangsumlenkspiegel (12) außerhalb der für das Empfangsstrahlenbündel (16) wirksamen Zone eine lichtstreuende Testzone (19) vorgesehen ist, die bei Drehung innerhalb des Winkelbereichs, in dem der Empfangsumlenkspiegel (12) dem Fenster (2) abgekehrt ist, einen Teil des hierauf fallenden Sendestrahlenbündels (5) über den Empfangskollimator (17) zum Empfänger (4) sendet.

2. Vorrichtung nach Anspruch 1, **dadurch gekennzeichnet, daß** die Testzone (19) als einstückige Verlängerung des Empfangsumlenkspiegels (12) ausgebildet ist.

3. Vorrichtung nach Anspruch 1 oder 2, **dadurch gekennzeichnet, daß** die Testzone (19) eine rauhe Oberfläche aufweist.

4. Vorrichtung nach Anspruch 2 oder 3, **dadurch gekennzeichnet, daß** die Oberfläche des aus transparentem Material gebildeten Empfangsumlenkspiegels (12) auf der der Testzone (19) abgekehrten Seite im hierzu korrespondierendem Abschnitt (21) rauh ist.

5. Vorrichtung nach einem der Ansprüch 2 bis 4, **dadurch gekennzeichnet, daß** die Oberfläche des Empfangsspiegels (12) auf der der Testzone (19) abgekehrten Seite in hierzu korrespondierendem Abschnitt (21) mit einer strahlungsabsorbierenden Schicht (22) versehen ist.

6. Vorrichtung nach einem der Ansprüche 1 bis 5, **dadurch gekennzeichnet, daß** in dem Gehäuse (1) ein Spiegel (23) angeordnet ist, der das vom Sendeumlenkspiegel (11) ausgesandte Strahlenbündel (5) auf die Testzone (19) und das von der Testzone (19) auf den Spiegel (23) reflektierte Strahlenbündel auf den Empfangsumlenkspiegel (12) reflektiert.

7. Vorrichtung zum Orten von in einen zu überwachenden Raumbereich eindringenden Objekten, mit einem Gehäuse (1), das einen Sender (3) und einen Empfänger (4) für optische Strahlung sowie eine umlaufend drehbare optische Umlenkeinrichtung (8) einerseits mit einem um eine Rotationsachse (10) drehbaren und gegenüber dieser geneigten Sendeumlenkspiegel (11) für ein ausfallendes Sendestrahlenbündel (5) durch ein Fenster (2) im Gehäuse (1) in den durch das ausfallende Sendestrahlenbündel (5) zu überstreichenden Raumbereich und andererseits mit einem Empfangsumlenkspiegel (12) zum Lenken eines aus dem Raumbereich reflektierten, durch das Fenster (2) einfallenden Empfangsstrahlenbündels (16) über einen Empfangskollimator (17) zum Empfänger (4) enthält, **dadurch gekennzeichnet, daß** die Umlenkeinrichtung (8) eine Streuscheibe (24) trägt, die in den Strahlengang vom Sender (3) zum Sendeumlenkspiegel (11) in einer Position bewegbar ist, in der der Sendeumlenkspiegel (11) das darauf fallende Strahlenbündel (5) auf einen im Gehäuse (1) befindlichen Spiegel (23) richtet, der das empfangene Strahlenbündel auf dem Empfangsumlenkspiegel (12) reflektiert.

8. Vorrichtung nach Anspruch 6 oder 7, **dadurch gekennzeichnet, daß** die Testzone (19) bzw. der Spiegel (23) bzw. die Streuscheibe (24) in Drehrichtung der Umlenkeinrichtung (8) Bereiche unterschiedlicher Streu- bzw. Reflexionsstärke aufweist.

## Claims

1. Apparatus for locating objects penetrating into a region of space to be monitored, having a housing (1) which contains a transmitter (3) and a receiver (4) for optical radiation, as well as an optical deflecting device (8) which can be rotated in a revolving fashion and, on the one hand, has a transmitting deflecting mirror (11), which can be rotated about a rotation axis (10) and is inclined to the latter, for a transmitted ray bundle (5) outgoing through a window (2) in the housing (1) into the region of space to be swept by the outgoing transmitted ray bundle (5) and, on the other hand, has a receiving deflecting mirror (12) for deflecting a received ray bundle (16), reflected from the region of space and incident through the window (2), to the receiver (4) via a receiving collimator (17), **characterized in that** provided on the receiving deflecting mirror (12) outside the active zone for the received ray bundle (16) is a light scattering test zone (19) which, on rotating inside the angular range in which the receiving deflecting mirror (12) is averted from the window (2) transmits a portion of the transmitted ray bundle (5) falling thereon to the receiver (4) via the receiving collimator (17).

2. Apparatus according to Claim 1, **characterized in that** the test zone (19) is designed as a unipartite extension of the receiving deflecting mirror (12).

3. Apparatus according to Claim 1 or 2, **characterized in that** the test zone (19) has a rough surface.

4. Apparatus according to Claim 2 or 3, **characterized in that** the surface of the receiving deflecting mirror (12) formed from transparent material is rough on the side averted from the test zone (19) in the section (21) corresponding hereto.

5. Apparatus according to one of Claims 2 to 4, **characterized in that** the surface of the receiving mirror (12) is provided with a radiation absorbing layer (22) on the side averted from the test zone (19) in the section (21) corresponding hereto.

6. Apparatus according to one of Claims 1 to 5, **characterized in that** arranged in the housing (1) is a mirror (23) which reflects the ray bundle (5) emitted by the transmitting reflecting mirror (11) onto the test zone (19), and reflects onto the receiving deflecting mirror (12) the ray bundle reflected by the test zone (19) onto the mirror (23).

7. Apparatus for locating objects penetrating into a region of space to be monitored, having a housing (1) which contains a transmitter (3) and a receiver (4) for optical radiation, as well as an optical deflecting device (8) which can be rotated in a revolving fashion and, on the one hand, has a transmitting deflecting mirror (11), which can be rotated about a rotation axis (10) and is inclined to the latter, for a transmitted ray bundle (5) outgoing through a window (2) in the housing (1) into the region of space to be swept by the outgoing transmitted ray bundle (5) and, on the other hand, has a receiving deflecting mirror (12) for deflecting a received ray bundle (16), reflected from the region of space and incident through the window (2), to the receiver (4) via a receiving collimator (17), **characterized in that** the deflecting device (8) carries a diffusing disc (24) which can be moved into the beam path from the transmitter (3) to the transmitting deflecting mirror (11) at a position where the transmitting deflecting mirror (11) directs the ray bundle (5) falling thereon onto a mirror (23) which is located in the housing (1) and reflects the ray bundle received onto the receiving deflecting mirror (12).

8. Apparatus according to Claim 6 or 7, **characterized in that** the test zone (19) or the mirror (23) or the diffusing disc (24) has regions of different scattering intensity or reflective intensity in the direction of rotation of the deflecting device (8).

## Revendications

1. Dispositif de détection d'objets pénétrant dans une zone spatiale à surveiller, comportant un boîtier (1) qui contient un émetteur (3) et un récepteur (4) pour rayonnement optique ainsi qu'un dispositif de déflexion optique à rotation giratoire (8) comportant, d'une part, un miroir déflecteur d'émission (11) pouvant tourner autour d'un axe de rotation (10) et incliné par rapport à celui-ci, destiné à un faisceau de rayons d'émission (5) sortant par une fenêtre (2) ménagée dans le boîtier (1) jusque dans la zone spatiale à balayer au moyen du faisceau de rayons d'émission sortant (5) et comportant, d'autre part, un miroir déflecteur de réception (12) servant à diriger jusqu'au récepteur (4), par l'intermédiaire d'un collimateur de réception (17), un faisceau de rayons de réception (16) réfléchi depuis la zone spatiale et entrant par la fenêtre (2), **caractérisé en ce qu'**il est prévu, sur le miroir déflecteur de réception (12), en dehors de la zone active vis-à-vis du faisceau de rayons de réception (16), une zone de contrôle (19) dispersant la lumière qui, lors de la rotation à l'intérieur du secteur angulaire dans lequel le miroir déflecteur de réception (12) est détourné de la fenêtre (2), envoie au récepteur (4), par l'intermédiaire du collimateur de réception (17), une partie du faisceau de rayons d'émission (5) le frappant.

2. Dispositif selon la revendication 1, **caractérisé en ce que** la zone de contrôle (19) est réalisée sous forme de prolongement du miroir déflecteur de réception (12) ne formant qu'une seule pièce avec ce dernier.

3. Dispositif selon la revendication 1 ou 2, **caractérisé en ce que** la zone de contrôle (19) présente une surface rugueuse.

4. Dispositif selon la revendication 2 ou 3, **caractérisé en ce que** la surface du miroir déflecteur de réception (12) constitué de matière transparente est rugueuse sur la face détournée de la zone de contrôle (19), dans la section (21) correspondant à cette dernière.

5. Dispositif selon l'une des revendications 2 à 4, **caractérisé en ce que** la surface du miroir de réception (12) est pourvue sur la face détournée de la zone de contrôle (19), dans la section (21) correspondant à cette dernière, d'une couche absorbant le rayonnement (22).

6. Dispositif selon l'une des revendications 1 à 5, **caractérisé en ce qu'**il y a dans le boîtier (1) un miroir (23) qui réfléchit sur la zone de contrôle (19) le faisceau de rayons (5) émis par le miroir déflecteur d'émission (11) et qui réfléchit sur le miroir déflecteur de réception (12) le faisceau de rayons réfléchi par la zone de contrôle (19) en direction du miroir (23).

7. Dispositif de détection d'objets pénétrant dans une zone spatiale à surveiller, comportant un boîtier (1) qui contient un émetteur (3) et un récepteur (4) pour rayonnement optique ainsi qu'un dispositif de déflexion optique à rotation giratoire (8) comportant, d'une part, un miroir déflecteur d'émission (11) pouvant tourner autour d'un axe de rotation (10) et incliné par rapport à celui-ci, destiné à un faisceau de rayons d'émission (5) sortant par une fenêtre (2) ménagée dans le boîtier (1) jusque dans la zone spatiale à balayer au moyen du faisceau de rayons d'émission sortant (5) et comportant, d'autre part, un miroir déflecteur de réception (12) servant à diriger jusqu'au récepteur (4), par l'intermédiaire d'un collimateur de réception (17), un faisceau de rayons de réception (16) réfléchi depuis la zone spatiale et entrant par la fenêtre (2), **caractérisé en ce que** le dispositif de déflexion (8) porte un diffuseur (24) qui est déplaçable, dans la trajectoire du rayon entre émetteur (3) et miroir déflecteur d'émission (11), dans une position dans laquelle le miroir déflecteur d'émission (11) dirige le faisceau de rayons (5) qui le frappe vers un miroir (23) qui se trouve dans le boîtier (1) et qui réfléchit le faisceau de rayons reçu sur le miroir déflecteur de réception (12).

8. Dispositif selon la revendication 6 ou 7, **caractérisé en ce que** la zone de contrôle (19) ou le miroir (23) ou le diffuseur (24) présentent, dans le sens de rotation du dispositif de déflexion (8), des zones de différentes puissances de dispersion ou de réflexion.
